## Europäisches Patentamt
## European Patent Office
## Office européen des brevets

(19)

(11) Veröffentlichungsnummer : **0 133 549**
**B1**

(12)

# EUROPÄISCHE PATENTSCHRIFT

(45) Veröffentlichungstag der Patentschrift :
30.12.86

(21) Anmeldenummer : 84109146.5

(22) Anmeldetag : 01.08.84

(51) Int. Cl.⁴ : **F 15 D   1/00**, B 01 D 19/00,
F 22 B 37/32

(54) **Phasentrenner von Zweiphasengemisch bei Ringströmungen.**

(30) Priorität : 05.08.83 CH 4259/83

(43) Veröffentlichungstag der Anmeldung :
27.02.85 **Patentblatt 85/09**

(45) Bekanntmachung des Hinweises auf die Patenterteilung : 30.12.86 **Patentblatt 86/52**

(84) Benannte Vertragsstaaten :
**BE CH DE FR LI SE**

(56) Entgegenhaltungen :
**CH-A-   197 075**
**DE-B- 2 214 653**
**FR-A-   962 402**
**FR-A- 2 086 768**
**FR-A- 2 357 818**
**US-A- 1 708 653**
**US-A- 2 122 630**
**US-A- 2 228 816**
**US-A- 2 571 503**
**US-A- 2 983 331**
**US-A- 3 345 803**
**US-A- 4 199 332**

(73) Patentinhaber : **BBC Aktiengesellschaft Brown,
Boveri & Cie.
Haselstrasse
CH-5401 Baden (CH)**

(72) Erfinder : **Domnick, Joachim
Sonnenrain 13A
D-7891 Küssaberg 2 (DE)**
Erfinder : **Lang, Helmut
Vordere Höhenstrasse 10
CH-5430 Wettingen (CH)**

EP 0 133 549 B1

## Beschreibung

Die vorliegende Erfindung betrifft einen Phasentrenner gemäß dem Oberbegriff des Anspruchs.

In vielen Systemen besteht die Notwendigkeit, die dort vorhandene Flüssigkeit/Gas-Gemischströmung phasenartig zu separieren.

Beispielsweise bei Dampfturbinenanlagen ist dies besonders erforderlich, um das Erosions- und Korrosionspotential der dort herrschenden Wasser/Wasserdampf-Strömung zu minimieren, den auftretenden Druckverlust in den Rohrleitungen zu senken sowie Schläge im System zu vermeiden. Des öftern sind auch die einer Dampfturbogruppe nachgeschalteten Wärmetauscher für den Durchlaß eines Zweiphasengemisches nicht geeignet, bzw. die Systeme sind nicht entsprechend ausgelegt.

Vielfach bestehen solche Zweiphasenströmungen jeweils aus einer Kern- und Ringströmung, d. h. die flüssige Phase bildet an der Rohrwand einen geschlossenen Film, der die als Kern im Innern strömende gasförmige Phase vollständig umhüllt. Der Anteil des Wandfilms am gesamten Flüssigkeitsmassenstrom kann bis zu 80 % betragen.

Bei Dampfturbinenanlagen werden für die Phasentrennung von Zweiphasengemisch, einzeln oder kombiniert, folgende Vorkehrungen getroffen :
— Einbau von einfachen Prallplatten
— Anbringen von Pelton-Schaufeln
— Einbau von Umlenkabscheidern
— Zuhilfenahme eines Zyklon-Abscheiders.

Alle diese Maßnahmen haben den einen Nachteil gemeinsam, daß die an sich in der Ringströmung bereits vollzogene Phasentrennung nicht Ausgangspunkt für die Ausscheidung der Phasen voneinander bildet, sondern es kommt zu einer Wiedervermischung der beiden Phasen miteinander. Die entstehenden Tropfen werden dann zum einen durch Gewichtskräfte (Prallplatten, Pelton-Schaufeln) und zum anderen durch Zentrifugalkräfte (Umlenkabscheider, Zyklon) ausgeschieden.

Erstere Lösung verlangt eine starke Erweiterung des Strömungsquerschnittes, um die Aufprallgeschwindigkeit herabzusetzen, welche wiederum bewirkt, daß die Schleppkraft des Dampfes bzw. des Gases vermindert wird. Die zweite Lösung benötigt im Falle des Zyklons eine starke Verdrallung der Strömung.

Aus der FR-A-2 357 818 ist es bekannt, durch eine Drallbewegung die Ausscheidung des Flüssigkeitsanteils aus einer Zweiphasengemischströmung einzuleiten. Im Grunde genommen handelt es sich hier um eine Zentrifugierung des Flüssigkeit/Dampf-Gemisches. Dabei wird erreicht, daß sich entlang der gemischführenden Rohrleitungswand die Flüssigkeitsanteile des Gemisches niederschlagen, welche dann weiter stromabwärts ausgeschieden werden. Die vorrichtungsmässige Ausscheidung wird durch Integrierung eines konzentrischen Rohres in die Rohrleitung bewerkstelligt, wobei die Ableitung der Flüssigkeitsanteile durch den zwischen den beiden Rohren entstehenden Kreisringdurchgang geschieht. Die Oeffnung des Kreisringdurchganges ist dabei eine heikle Grösse : Optimal ist der Durchgang nur dann, wenn gerade der Flüssigkeitswandfilm absorbiert werden kann. Eine zu kleine Oeffnung bedeutet eine umgenügende Flüssigkeitsausscheidung : eine zu grosse Oeffnung bringt hingegen eine nicht gewollte Ausscheidung von Dampf mit sich. Erschwerend bei einer Zentrifugierung des Gemisches ist die fehlende Homogenität des Flüssigkeitswandfilmes selbst. Es ist also zu erwarten, daß die angestrebte Trennung des Zweiphasengemisches labil ablaufen wird. Dabei ist zu erwarten, daß die Trennung des Zweiphasengemisches zusammenbrechen kann, wenn gegen den im gasführenden Rohr potentiell sich bildenden Staudruck keine Maßnahmen getroffen werden. Maßnahmen dagegen sind insofern von Bedeutung, als ein solcher den Flüssigkeitswandfilm im Bereich des Kreisringdurchganges zu zerstören vermag. Des weiteren müssen Vorkehrungen getroffen werden, daß Flüssigkeitsanteile, die am Kreisringdurchgang nicht ausgeschieden und vom Gasstrom mitgerissen werden, weiter stromabwärts ohne neuerliche Eingriffe auf die sich inzwischen laminar gebildeten Gasströmung ausgeschieden werden können.

Hier will die Erfindung Abhilfe schaffen. Der Erfindung, wie sie im Anspruch gekennzeichnet ist, liegt die Aufgabe zugrunde, bei einem Phasentrenner der eingangs genannten Art die Flüssigkeitswandfilm- und Gaskern-Strömung nach ihrer Separierung abzuführen, ohne daß es dabei zu einer Wiedermischung der Phasen kommen kann. Auch ist es Aufgabe der Erfindung Vorkehrungen zu treffen, daß bei der Abführung der gasförmigen Phase nicht ein Staudruck entstehen kann, der den Flüssigkeitswandfilm im Bereich des Kreisringdurchganges zerstören könnte. Des weiteren ist es Aufgabe der Erfindung dafür zu sorgen, daß jene Flüssigkeitsanteile, die am Kreisringdurchgang nicht zur Ausscheidung gelangen, weiter stromabwärts sanft ausgeschieden werden können.

Der Vorteil der Erfindung ist im wesentlichen darin zu sehen, daß durch Umlenkung der Gaskernströmung stromabwärts des Kreisringdurchganges und parallel oberhalb der darunterliegenden Wasseransammlung ein durch Aufprall der Gasströmung entstehender Staudruck vermieden wird. Durch diese Umlenkung ergibt sich des weiteren der Vorteil, daß die in der Gaskernströmung verbliebenen Flüssigkeitsanteile durch die natürliche in der Umlenkung herrschende Zentrifugalwirkung gut und einfach ausgeschieden werden können, ohne durch weitergehende Maßnahmen auf die Gaskernströmung einwirken zu müssen.

Im folgenden ist anhand der Zeichnung ein Ausführungsbeispiel des Erfindungsgegenstandes vereinfacht dargestellt und näher erläutert. Alle für das Verständnis der Erfindung umwesentlichen Elemente sind nicht dargestellt. Die Strömungsrichtung der Medien ist mit Pfeilen gekennzeichnet.

Es zeigt :

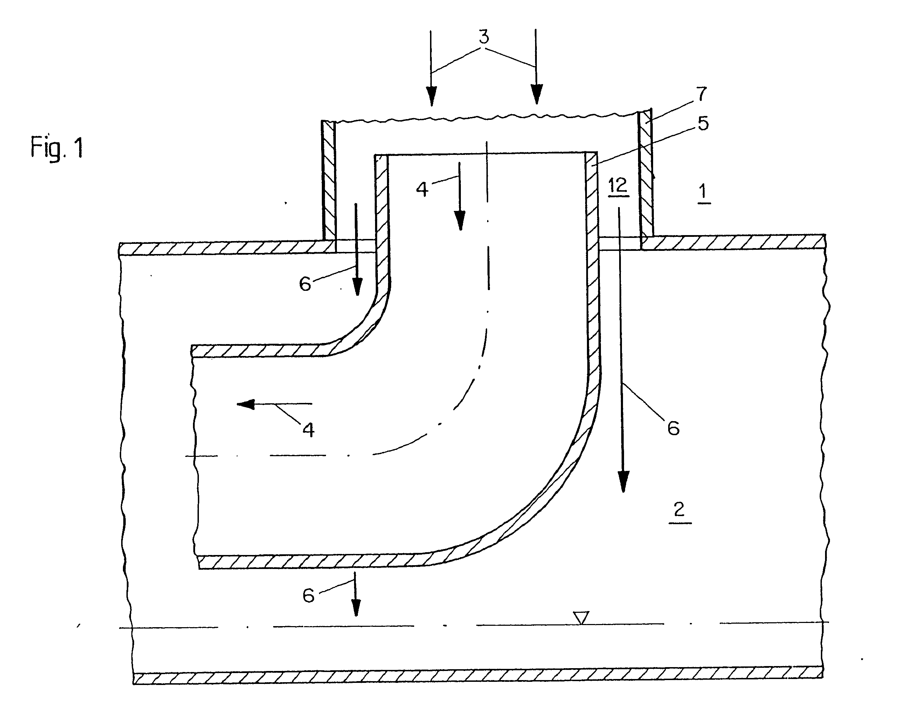

Fig. 1 einen erfindungsgemäßen Phasentrenner von Zweiphasengemisch.

Fig. 1 zeigt stark vereinfacht die Konzeption eines Phasentrenners von Zweiphasengemisch bei einer Strömung, bei welcher die Phasen des Gemisches 3 bereits strukturiert herangeführt werden : So bildet die flüssige Phase 6 des Gemisches an der Rohrwand der zweiphasengemischführenden Leitung 7 einen geschlossenen Film (Flüssigkeitswandfilm), der die im Innern strömende gasförmige Phase 4 (Gaskernströmung) vollständig umhüllt. Im Mündungsbereich 1 zu einer Flüssigkeitsansammlung 2 ist in der Rohrleitung 7 ein konzentrisches Innenrohr 5 eingesetzt, das gegenüber der Rohrleitung 7 durch einen Kreisringdurchgang 12 beabstandet ist. Dieser entspricht der Stärke des Flüssigkeitswandfilmes 6. Während die Gaskernströmung 4 durch das Innenrohr 5 strömt und oberhalb der Flüssigkeitsansammlung seitlich umgelenkt wird, kann der Flüssigkeitswandfilm 6 ungehindert durch den Kreisringdurchgang 12 abfließen. Nach der Trennung des Zweiphasengemisches 3 gelangen die Phasen 4 und 6 miteinander nicht mehr in Berührung, so daß die gefürchtete Wiedervermischung ausgeschlossen wird. Die Umlenkung des Innenrohres 5 stromabwärts des Kreisringdurchganges 12 und parallel oberhalb der Flüssigkeitsansammlung 2 verhindert einen etwaigen Staudruck in der Gaskernströmung 4. Dies vermeidet, daß der strömungstechnisch an sich labile Flüssigkeitswandfilm 6 im Bereich des Kreisringdurchganges 12 zerstört wird, mit der Folge, daß dann die Phasenausscheidung des Gemisches 3 nicht mehr gewährleistet wäre. Die Krümmung des Innenrohres 5 bewirkt des weiteren, daß die in der Gaskernströmung 4 hauptsächlich entlang der Scheidestelle verbliebenen Flüssigkeitsanteile durch die natürliche in der Umlenkung herrschende Zentrifugalwirkung gut und einfach, d. h. ohne auf die Gaskernströmung 4 mit weitergehenden Vorkehrungen einwirken zu müssen, also « sanft », ausgeschieden werden können.

**Patentanspruch**

Phasentrenner von Zweiphasengemisch in einer Rohrleitung (7), in der die flüssige Phase (6) des Gemisches (3) an der Rohrwand der Leitung (7) einen geschlossenen Film bildet, der die im Innern strömende gasförmige Phase (4) vollständig umhüllt, wobei in der Rohrleitung (7) in deren Mündungsbereich (1) oberhalb einer Flüssigkeitsansammlung (2) ein konzentrisches Innenrohr (5) eingesetzt ist, das gegenüber der Rohrwand der Leitung (7) durch einen Kreisringdurchgang (12) derart beabstandet ist, daß der Flüssigkeitswandfilm (6) durch den Kreisringdurchgang (12) zur Flüssigkeitsansammlung (2) und die gasförmige Phase (4) durch das Innenrohr abströmen, dadurch gekennzeichnet, daß der Mündungsbereich (1) der Rohrleitung (7) im wesentlichen vertikal zur Flüssigkeitsansammlung (2) verläuft und daß das Innenrohr (5) stromabwärts des Kreisringdurchganges (12) seitlich abgebogen ist und nach der Abbiegung parallel oberhalb der darunterliegenden Flüssigkeitsansammlung (2) verläuft.

**Claim**

Phase separator for a two-phase mixture in a pipe (7) in which the liquid phase (6) of the mixture (3) forms, on the pipe wall of the line (7), a closed film which completely surrounds the gaseous phase (4) flowing in the interior, a concentric inner pipe (5) being inserted in the pipe (7) in the outlet zone (1) thereof above a liquid accumulator (2), which inner pipe is, by means of a circular ring passage (12), at such a distance from the pipe wall of the line (7) that the liquid wall film (6) flows through the circular ring passage (12) to the liquid accumulator (2) and the gaseous phase (4) flows off through the inner pipe, characterized in that the outlet zone (1) of the pipe (7) extends substantially perpendicular to the liquid accumulator (2), and that the inner pipe (5) is bent off laterally downstream of the circular ring passage (12) and, after the bend, extends parallel to and above the liquid accumulator (2) located below.

**Revendication**

Séparateur de phases de mélange à deux phases dans une conduite (7), dans lequel la phase liquide (6) du mélange (3) forme sur la paroi tubulaire de la conduite (7) un film sans discontinuité qui entoure complètement la phase gazeuse (4) s'écoulant à l'intérieur, étant entendu que, dans la conduite (7), au niveau de sa zone d'embouchure (1) et au-dessus d'une accumulation de liquide (2), est inséré un tube intérieur concentrique (5) qui est espacé de la paroi tubulaire de la conduite (7) par un passage annulaire (12) d'une manière telle que le film de paroi liquide (6) s'écoule par le passage annulaire (12) vers l'accumulation de liquide (2) et que la phase gazeuse (4) s'écoule par le tube intérieur, caractérisé en ce que la zone d'embouchure (1) de la conduite (7) s'étend en substance verticalement vers l'accumulation de liquide (2) et le tube intérieur (5) est coudé latéralement vers l'aval du passage annulaire (12) et, au-delà du coude, il s'étend parallèlement au-dessus de l'accumulation de liquide (2) sous-jacente.

Fig. 1

0 133 549